# EUROPEAN PATENT APPLICATION

(11) **EP 3 023 869 A1**
(43) Date of publication of application: **25.05.2016**
(21) Application number: 14848264.9
(22) Date of filing: 14.07.2014
(51) Int. Cl.: G06F 3/042, G02B 6/122

(54) **INPUT DEVICE**

(30) Priority: 26.09.2013 JP 2013200514; 15.05.2014 JP 2014101369
(71) Applicant: Nitto Denko Corporation, Ibaraki-shi, Osaka 567-8680 (JP)
(72) Inventor: SHIMIZU Yusuke, Ibaraki-shi Osaka 567-8680 (JP); YOSHIOKA Ryoma, Ibaraki-shi Osaka 567-8680 (JP)
(74) Representative: Hoffmann Eitle
(86) International application number: PCT/JP2014/068665
(87) International publication number: WO 2015/045571

(57) **Abstract**

An input device is provided, which includes an optical waveguide free from cracking of cores which may otherwise occur when an input tip portion of an input element is pressed against the input device or moved on the input device. The input device includes a rectangular sheet-form optical waveguide (W) in which linear cores (2) arranged in a lattice pattern are held between a rectangular sheet-form under-cladding layer (1) and a rectangular sheet-form over-cladding layer (3). Dummy patterns (A) are provided in portions surrounded by the lattice-pattern linear cores (2), and held together with the cores (2) between the sheet-form under-cladding layer (1) and the sheet-form over-cladding layer (3). The dummy patterns (A) and the cores (2) each have an elasticity modulus that is not less than the elasticity moduli of the under-cladding layer (1) and the over-cladding layer (3), whereby the cores (2) are prevented from being cracked when the input tip portion is pressed against a surface region of the over-cladding layer (3) corresponding to the plurality of linear cores (2) arranged in the lattice-pattern or moved on the surface portion.

## Description

### TECHNICAL FIELD

The present invention relates to an input device including optical position detecting means.

### BACKGROUND ART

A position sensor for optically sensing a pressed position has been hitherto proposed (see, for example, PTL 1). The position sensor includes a sheet-form optical waveguide including a plurality of linear light-path cores arranged in two orthogonal directions and a cladding which covers peripheral portions of the cores, and is configured such that light emitted from a light emitting element is inputted to one-side end faces of the cores to be transmitted through the cores and received on the other-side end faces of the cores by a light receiving element. When a part of a surface of the sheet-form position sensor is pressed with a finger or the like, core portions in the pressed part are compressed (the pressed core portions each have a sectional area reduced in a pressing direction) and, therefore, the light receiving element detects reduction in light receiving level in the pressed core portions. Thus, the position sensor senses the pressed position.

### RELATED ART DOCUMENT

### PATENT DOCUMENT

PTL 1: JP-A-HEI8(1996)-234895

### SUMMARY OF INVENTION

When a user inputs a character or the like on the surface of the sheet-form position sensor of PTL 1 with the use of an input element such as a pen, however, the optical waveguide may be damaged by an input tip portion of the input element (a pen tip or the like) in some case. For easy deformation of the cores by the pressing and easy detection of the pressed position, more specifically, an over-cladding layer of the optical waveguide often has a smaller thickness (e.g., not greater than 200 µm) on the cores. In this case, if a pressing force applied onto the surface of the position sensor by the input tip portion of the input element is greater than a preset level (which is determined in consideration that an average pressing force to be applied by users is about 1.5 N), the input tip portion is liable to deeply sink into a square portion of the cladding surrounded by linear cores. This may crack the cladding portion, and the cracking may extend to the surrounding cores. When the input tip portion is moved by continuously applying the greater pressing force, the input tip portion may be caught by the linear cores, thereby cracking the cores. The cracked cores cannot properly transmit the light, so that the position sensor loses its function.

In view of the foregoing, it is an object of the present invention to provide an input device including an optical waveguide free from cracking of cores which may otherwise occur when an input tip portion of an input element is pressed against the input device or moved on the input device.

To accomplish the aforementioned object, an input device according to the present invention includes: a sheet-form optical waveguide including a plurality of linear cores arranged in a lattice pattern, dummy patterns respectively provided in portions surrounded by the linear cores, and a sheet-form under-cladding layer and a sheet-form over-cladding layer holding the cores and the dummy patterns therebetween; a light emitting element connected to one-side end faces of the cores of the optical waveguide; and a light receiving element connected to the other-side end faces of the cores; wherein light emitted from the light emitting element is transmitted through the cores of the optical waveguide and received by the light receiving element; wherein a surface region of the over-cladding layer corresponding to a plurality of linear cores arranged in a lattice-pattern is defined as an input region, and a pressed position at which the input region is pressed with an input tip portion of an input element is specified based on light transmission amounts of the cores changed by the pressing; wherein the dummy patterns and the cores each have an elasticity modulus that is not less than the elasticity moduli of the under-cladding layer and the over-cladding layer, whereby the cores are prevented from being cracked when the input region is pressed with the input tip portion.

The inventors of the present invention conducted studies on the configuration of the optical waveguide in order to prevent the cores of the optical waveguide from being cracked when the input tip portion of the input element (a pen or the like) is pressed against the input device and moved on the input device to input a character or the like on the input device by means of the input element, even if the over-cladding layer is thin and has a thickness of not greater than 200 µm, e.g., a thickness of 10 to 100 µm, on the cores. In the studies, the inventors conceived an idea that dummy patterns irrelevant to light transmission are provided in the portions surrounded by the linear cores and are held together with the cores between the sheet-form under-cladding layer and the sheet-form over-cladding layer, and further conducted studies. As a result, the inventors found that, where the elasticity moduli of the cores and the dummy patterns are not less than the elasticity moduli of the under-cladding layer and the over-cladding layer, the provision of the dummy patterns prevents the input tip portion (a pen tip or the like) from deeply sinking when a character or the like is inputted by applying a greater pressing force by means of the input element (the pen or the like). In addition, the inventors found that the over-cladding layer and the under-cladding layer are free from the cracking, and the cores are also free from the cracking. Further, the inventors found that, even if the input tip portion is moved in this state, the provision of the dummy patterns prevents the input tip portion from being caught by the cores and the cores are free from the cracking, and attained the present invention.

In the inventive input device, the dummy patterns are provided in the portions surrounded by the linear cores arranged in the lattice pattern, and are held together with the cores between the sheet-form under-cladding layer and the sheet-form over-cladding layer. Further, the elasticity moduli of the dummy patterns and the cores are not less than the elasticity moduli of the under-cladding layer and the over-cladding layer. With the provision of the dummy patterns, therefore, the portions surrounded by the linear cores are not significantly deformed to deeply sink even if the great pressing force is applied to the surrounded portions by the input tip portion of the input element. Thus, the cores are prevented from being cracked. Even if the input tip portion is moved in this state, the provision of the dummy patterns substantially prevents the input tip portion from being caught by the cores, so that the cores are free from the cracking.

Particularly, spacings between peripheral surfaces of the dummy patterns and opposed side surfaces of the cores may be each 10 to 300 µm. In this case, even if the input tip portion of the input element is very thin, the input tip portion is prevented from deeply sinking into the spacings. Therefore, the cores are free from the cracking.

The optical waveguide may be configured such that the cores and the dummy patterns are embedded in a surface of the under-cladding layer with top surfaces thereof being flush with the surface of the under-cladding layer, and the over-cladding layer covers the surface of the under-cladding layer, the top surfaces of the cores and the top surfaces of the dummy patterns. In this case, the configuration of the optical waveguide and the deformation suppressing effect of the dummy patterns synergistically make it easier to detect the pressed position at which the input region is pressed with the input tip portion of the input element, and improve the writing feeling.

### BRIEF DESCRIPTION OF DRAWINGS

[FIG. 1] FIGS. 1A and 1B are a plan view and a major enlarged sectional view, respectively, schematically showing an input device according to an embodiment of the present invention.
[FIG. 2] FIG. 2 is an enlarged partial sectional view schematically showing the input device in use.
[FIG. 3] FIGS. 3A to 3D are schematic diagrams for explaining a method for fabricating an optical waveguide of the input device.
[FIG. 4] FIG. 4 is a major enlarged sectional view schematically illustrating an optical waveguide of an input device according to another embodiment of the present invention.
[FIG. 5] FIG. 5 is a major enlarged sectional view schematically showing a modification of the input device.
[FIG. 6] FIGS. 6A to 6F are enlarged plan views each schematically showing an intersecting core portion of lattice-pattern cores in the input device.
[FIG. 7] FIGS. 7A and 7B are enlarged plan views each schematically showing light ray paths in an intersecting core portion of the lattice-pattern cores.

### DESCRIPTION OF EMBODIMENTS

Next, embodiments of the present invention will be described in detail with reference to the drawings.

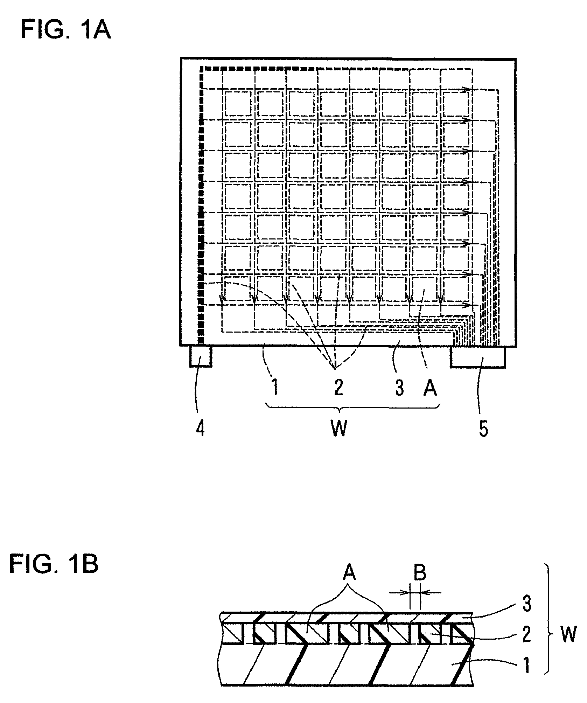

FIG. 1A is a plan view showing an input device according to an embodiment of the present invention, and FIG. 1B is an enlarged view showing a middle portion of the input device in section. The input device according to this embodiment includes: a rectangular sheet-form optical waveguide W including linear cores 2 arranged in a lattice pattern, rectangular dummy patterns A respectively provided in portions surrounded by the lattice-pattern linear cores 2, and a rectangular sheet-form under-cladding layer 1 and a rectangular sheet-form over-cladding layer 3 holding the cores 2 and the dummy patterns A therebetween; a light emitting element 4 connected to one-side end faces of the linear cores 2 arranged in the lattice pattern; and a light receiving element 5 connected to the other-side end faces of the linear cores 2. Light emitted from the light emitting element 4 is transmitted through the cores 2, and received by the light receiving element 5. A surface region of the over-cladding layer 3 corresponding to the plurality of linear cores 2 arranged in the lattice-pattern is defined as an input region. In FIG. 1A, the cores 2 are indicated by broken lines, and the thicknesses of the broken lines correspond to the thicknesses of the cores 2. In FIG. 1A, some of the cores 2 are omitted. In FIG. 1A, arrows each indicate a light traveling direction.

In the optical waveguide W, the dummy patterns A and the cores 2 each have an elasticity modulus that is not less than the elasticity moduli of the under-cladding layer 1 and the over-cladding layer 3. For example, the elasticity moduli of the dummy patterns A and the cores 2 are set within a range of 1 to 10 GPa. The elasticity modulus of the over-cladding layer 3 is set within a range of 0.1 to 10 GPa, and the elasticity modulus of the under-cladding layer 1 is set within a range of 0.1 to 1 GPa. If the elasticity modulus of the cores 2 is less than the elasticity moduli of the under-cladding layer 1 and the over-cladding layer 3, the peripheries of the cores 2 will become too hard. Therefore, the cores 2 are not properly deformed with respect to the pressing, making it difficult to accurately detect the pressed position. The provision of the dummy patterns A is a maj or characteristic feature of the present invention.

Even if a great pressing force is applied to the input region on the surface of the over-cladding layer 3 when a character or the like is inputted by means of an input element such as a pen, the provision of the dummy patterns A prevents the portions surrounded by the linear cores 2 from being significantly deformed to deeply sinking. As a result, the over-cladding layer 3 and the under-cladding layer 1 are free from the cracking, and the cores are also free from the cracking. Even if an input tip portion (a pen tip or the like) of the input element is moved in this state, the input tip portion (the pen tip or the like) is less liable to be caught by the cores 2 with the provision of the dummy patterns A. As a result, the cores 2 are free from the cracking.

In this embodiment, spacings B between peripheral side surfaces of the dummy patterns A and opposed side surfaces of the cores 2 are small in a range of 10 to 300 µm. Even if the input tip portion (the pen tip or the like) is very thin, the input tip portion is prevented from deeply sinking into the spacings B. As a result, the cores 2 are free from cracking.

In this embodiment, the dummy patterns A are formed from the same photosensitive resin as the cores 2. The dummy patterns A and the cores 2 are simultaneously formed by a photolithography method using a single photomask. If the dummy patterns A were formed in contact with the cores 2 (with a spacing of 0 µm), light transmitted through the cores 2 would go into the dummy patterns A and, therefore, proper light transmission would be impossible. For this reason, it is necessary to provide the spacings B. If the spacings B are too small, it will be difficult to form the spacings B. If the spacings are too great, the input tip portion (the pen tip or the like) is liable to deeply sink into the spacings B. In view of this, the spacings B are each set in a range of 10 to 300 µm as described above in this embodiment.

In this embodiment, the cores 2 arranged in the lattice pattern and the rectangular dummy patterns A are embedded in a surface of the sheet-form under-cladding layer 1 with top surfaces thereof being flush with the surface of the under-cladding layer 1, and the sheet-form over-cladding layer 3 covers the surface of the under-cladding layer 1 and the top surfaces of the cores 2 and the top surfaces of the dummy patterns A. Thus, the optical waveguide W is configured in a sheet form. In the optical waveguide W having this specific configuration, the over-cladding layer 3 has a uniform thickness, and the dummy patterns A have a deformation suppressing effect. This makes it easy to sense the pressed position at which the input region is pressed with the input tip portion of the input element, thereby improving the feeling of the writing with the input element. Where the optical waveguide W has the aforementioned configuration, the under-cladding layer 1 has a thickness of, for example, 20 to 2000 µm, and the cores 2 and the dummy patterns A each have a thickness of, for example, 5 to 100 µm. Further, the over-cladding layer 3 has a relatively small thickness, e.g., a thickness of 1 to 200 µm, preferably 10 to 100 µm. Thus, the pressed position at which the input region is pressed with the input element (the pen or the like) can be easily detected.

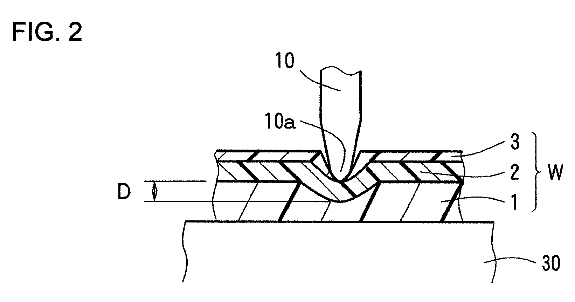

As shown in a sectional view of FIG. 2, for example, the input device is placed on a planar base 30 such as a table and, in use, information such as a character is written on the input region by means of the input element 10 (the pen or the like). In the writing, the surface of the over-cladding layer 3 of the optical waveguide W is pressed with the input tip portion 10a (the pen tip or the like). In a part of the input device pressed with the input tip portion 10a (the pen tip or the like), a core portion 2 is bent along the input tip portion 10a (the pen tip or the like) to sink in the under-cladding layer 1. Light is leaked (scattered) from the bent core portion 2. Therefore, the light receiving element 5 detects reduction in light receiving level in the core portion 2 pressed with the input tip portion 10a (the pen tip or the like). The input device can sense the position (coordinates) and the movement locus of the input tip portion 10a (the pen tip or the like) based on the reduction in light receiving level.

When the pressing with the input tip portion 10a is removed (the inputting ends), the under-cladding layer 1, the cores 2 and the over-cladding layer 3 are restored to their original states (see FIG. 1B) by their own resilience. At this time, the dummy patterns A assist the resilience. The upper limit of the sinking depth D by which the cores 2 sink into the under-cladding layer 1 is preferably 2000 µm. If the sinking depth D is greater than the upper limit, there is a possibility that the under-cladding layer 1, the cores 2 and the over-cladding layer 3 are not restored to their original states and the optical waveguide W is cracked.

The input device further includes a CPU (central processing unit) (not shown) for controlling the input device. The CPU incorporates a program which determines the position and the movement locus of the input tip portion 10a (the pen tip or the like) based on the reduction in light receiving level detected by the light receiving element 5. For example, data indicative of the position and the movement locus of the input tip portion 10a is stored (memorized) as electronic data in storage means such as a memory.

Further, information such as notes stored (memorized) in the storage means can be reproduced (displayed) on a reproduction terminal (a personal computer, a smartphone or a tablet terminal), or stored in the reproduction terminal. In this case, the reproduction terminal and the input device are connected to each other via a connection cable such as a micro USB cable. The information is stored (memorized) in a versatile file form such as a pdf form in the storage means (memory).

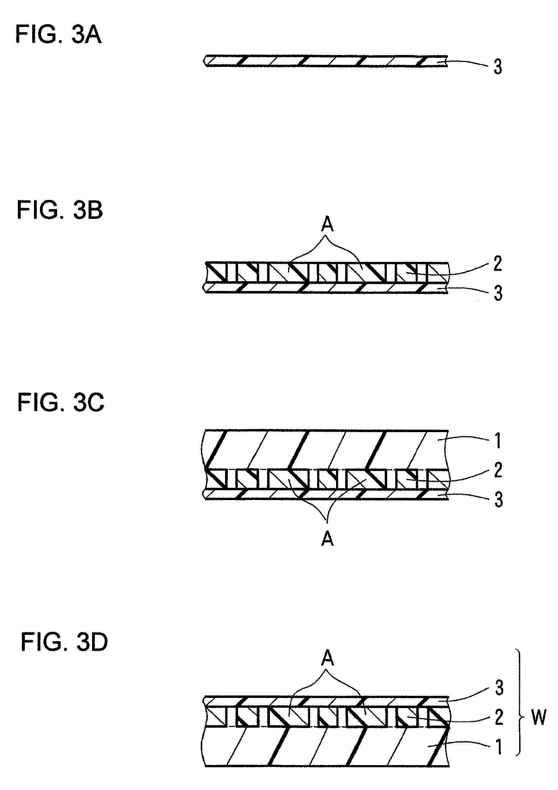

Next, a method for fabricating the optical waveguide W will be described. Exemplary materials for the under-cladding layer 1, the cores 2, the over-cladding layer 3 and the dummy patterns A of the optical waveguide W include photosensitive resins and thermosetting resins. The optical waveguide W may be fabricated by a method suitable for the materials to be used. First, as shown in FIG. 3A, the sheet-form over-cladding layer 3 is formed as having a uniform thickness. Then, as shown in FIG. 3B, the cores 2 and the dummy patterns A are formed in the predetermined pattern on an upper surface of the over-cladding layer 3 as projecting from the upper surface of the over-cladding layer 3. In this embodiment, the cores 2 and the dummy patterns A are simultaneously formed from a photosensitive resin material with the use of a single photomask. In turn, as shown in FIG. 3C, the sheet-form under-cladding layer 1 is formed over the upper surface of the over-cladding layer 3 to cover the cores 2 and the dummy patterns A. Subsequently, as shown in FIG. 3D, the resulting structure is turned upside down, so that the under-cladding layer 1 is located on a lower side and the over-cladding layer 3 is located on an upper side. Thus, the optical waveguide W is fabricated.

The refractive index of the cores 2 is set greater than the refractive indices of the under-cladding layer 1 and the over-cladding layer 3. The elasticity moduli and the refractive indices are adjusted by controlling the selection of the types of the materials and the formulations of the materials.

In the aforementioned embodiment, the dummy patterns A each have a rectangular shape, but may have other shape, e.g., a round shape or a polygonal shape.

In the aforementioned embodiment, the dummy patterns A and the cores 2 are simultaneously formed from the same materials, but the material for the dummy patterns A may be different from the material for the cores 2. It is not necessary to simultaneously form the dummy patterns A and the cores 2. Particularly, where the dummy patterns A are made of a material that is not transparent to light traveling through the cores 2, the dummy patterns A may be provided in contact with the cores 2.

In the aforementioned embodiment, the top surfaces of the dummy patterns A are located at the same height level as the top surfaces of the cores 2 (are flush with the top surfaces of the cores 2), and this arrangement is preferred. As long as satisfying the condition to prevent cracking of the cores 2, it is also possible to configure the optical waveguide such that the top surfaces of the dummy patterns A may be located at a lower height level or a higher height level than the top surfaces of the cores 2.

In the aforementioned embodiment, the dummy patterns A and the cores 2 have the same thickness, and this arrangement is preferred. As long as satisfying the condition to prevent cracking of the cores 2, it is also possible to configure the optical waveguide such that the thickness of the dummy patterns A may be different from the thickness of the cores 2.

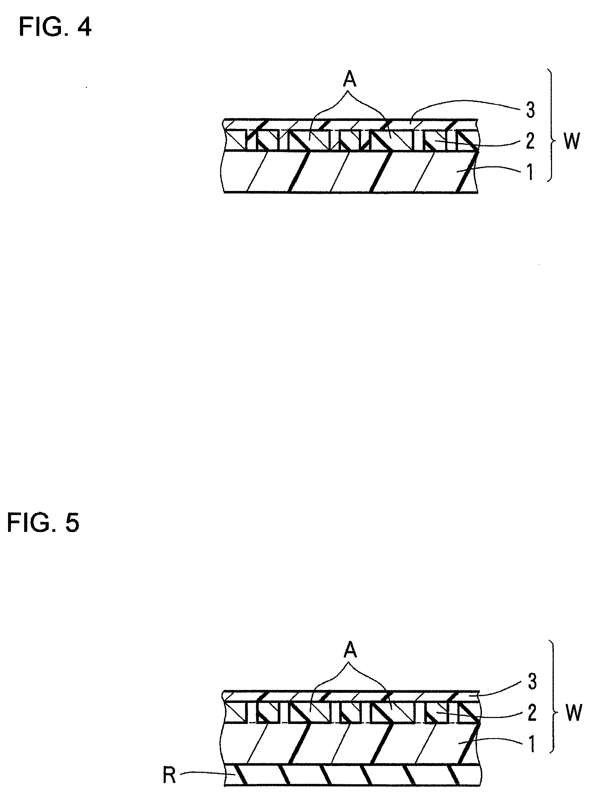

The optical waveguide W may have a construction different from that of the aforementioned embodiment. As shown in a sectional view of FIG. 4, for example, the optical waveguide W may be configured such that cores 2 and dummy patterns A arranged in a predetermined pattern project from a surface of a sheet-form under-cladding layer 1 having a uniform thickness, and an over-cladding layer 3 is provided over the surface of the under-cladding layer 1 to cover the cores 2 and the dummy patterns A.

As shown in a sectional view of FIG. 5, an elastic layer R such as a rubber layer may be provided on a back surface of the under-cladding layer 1 of the optical waveguide W. In FIG. 5, the elastic layer R is provided on the optical waveguide W shown in the sectional view of FIG. 1B. The elastic layer R may be provided in the same manner as described above on the optical waveguide W shown in the sectional view of FIG. 4. In these cases, even if the under-cladding layer 1, the cores 2 and the over-cladding layer 3 each have lower resilience or are each formed of a material intrinsically having lower resilience, the elasticity of the elastic layer R can compensate for the lower resilience. Therefore, the optical waveguide W can be restored to its original state after the pressing with the input tip portion 10a of the input element 10 (see FIG. 2) is removed. For example, the elastic layer R has a thickness of 20 to 2000 µm, and an elasticity modulus of 0.1 M to 1 GPa.

The input element 10 is merely required to be able to properly press the optical waveguide W as described above, and examples of the input element 10 include a writing implement capable of writing on a paper sheet with ink or the like and a simple rod that is not adapted for writing with ink.

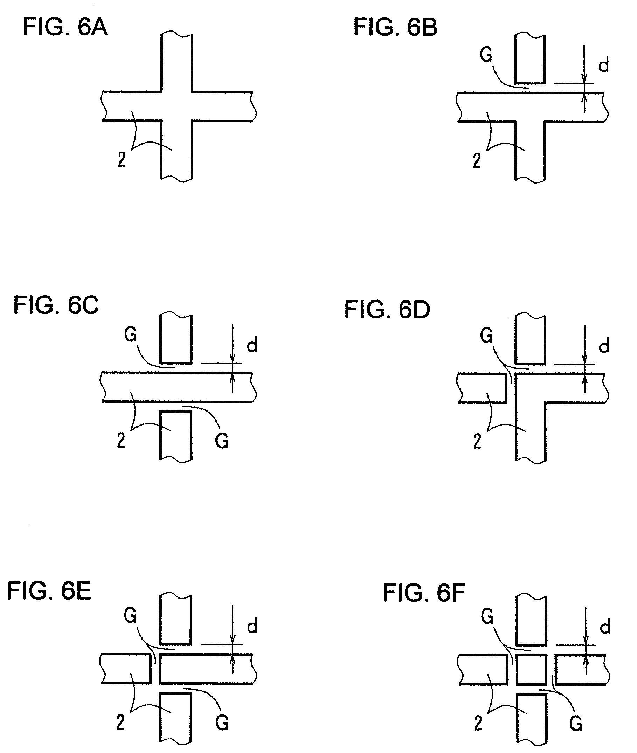

In the aforementioned embodiment, intersecting core portions of the linear cores 2 arranged in the lattice pattern each continuously extend in four intersecting directions as shown in an enlarged plan view of FIG. 6A, but may be configured in other ways. For example, as shown in FIG. 6B, a part of the intersecting core portion may be discontinuous and separated in one of the intersecting directions from the other part of the intersecting core portion by a gap G. The gap G is filled with the material for the under-cladding layer 1 or the over-cladding layer 3. The gap G has a width d that is greater than 0 (zero) (sufficient to form the gap G) and typically not greater than 20 µm. Similarly, as shown in FIGS. 6C and 6D, two parts of the intersecting core portion may be discontinuous in two of the intersecting directions (in two opposite directions in FIG. 6C, or in two adjacent directions in FIG. 6D) from the other part of the intersecting core portion. Further, as shown in FIG. 6E, three parts of the intersecting core portion may be discontinuous in three of the intersecting directions from the other part of the intersecting core portion. As shown in FIG. 6F, four parts of the intersecting core portion may be discontinuous in all the four intersecting directions from the other part of the intersecting core portion. Further, the cores 2 may be arranged in a lattice pattern including two or more of the aforementioned types of intersecting core portions shown in FIGS. 6A to 6F. In the present invention, the lattice pattern defined by the plurality of linear cores 2 is herein meant to include intersecting core portions some or all of which are configured in any of the aforementioned manners.

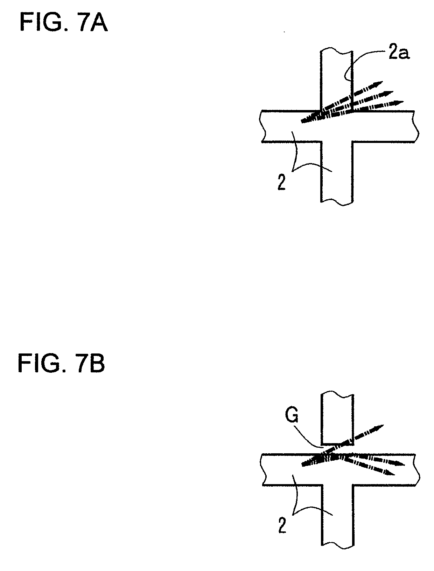

Where at least one part of the intersecting core portion is discontinuous in at least one of the intersecting directions from the other part of the intersecting core portion as shown in FIGS. 6B to 6F, intersection light loss can be reduced. In an intersecting core portion continuously extending in all the four intersecting directions, as shown in FIG. 7A, light traveling through a core 2 orthogonally intersecting a specific core 2 extending in one of the intersecting directions (in an upward direction in FIG. 7A) is incident on the intersecting core portion to partly reach a wall surface 2a of the specific core 2, and goes out of the specific core 2 (as indicated by arrows of two-dot-and-dash lines in FIG. 7A) because of greater reflection angles on the wall surface 2a. Similarly, light goes out of a part of the specific core 2 extending in a direction opposite from the aforementioned direction (in a downward direction in FIG. 7A). Where a part of the intersecting core portion is discontinuous in one of the intersecting directions (in an upward direction in FIG. 7B) from the other part of the intersecting core portion in the presence of a gap G, as shown in FIG. 7B, an interface is defined between the gap G and the core 2 and, therefore, the light transmitted through the core 2 in FIG. 7A is partly reflected at smaller reflection angles on the interface without passing through the interface, and continuously travels through the core 2 (as indicated by arrows of two-dot-and-dash lines in FIG. 7B). Therefore, where at least one part of the intersecting core portion is discontinuous in at least one of the intersecting directions from the other part of the intersecting core portion, as described above, the intersection light loss can be reduced. As a result, the pressed position at which the input region is pressed with the pen tip or the like can be detected at a higher detection sensitivity.

Next, inventive examples will be described in conjunction with a comparative example. It should be understood that the invention be not limited to the inventive examples.

### EXAMPLES

### [Under-Cladding Layer Formation Material and Over-Cladding Layer Formation Material]

Component (a): 75 parts by weight of an epoxy resin (YL7410 available from Mitsubishi Chemical Corporation)
Component (b): 25 parts by weight of an epoxy resin (JER1007 available from Mitsubishi Chemical Corporation)
Component (c): 2 parts by weight of a photo-acid generator (CPI101A available from San-Apro Ltd.)

An under-cladding layer formation material and an over-cladding layer formation material were each prepared by mixing Components (a) to (c).

### [Core/Dummy Pattern Formation Material]

Component (d): 75 parts by weight of an epoxy resin (EHPE3150 available from Daicel Corporation)
Component (e): 25 parts by weight of an epoxy resin (KI-3000-4 available from Toto Chemical Industry Co., Ltd.)
Component (f): 1 part by weight of a photo-acid generator (SP170 available from ADEKA Corporation) Component (g): 50 parts by weight of ethyl lactate (solvent available from Wako Pure Chemical Industries, Ltd.)

A core/dummy pattern formation material was prepared by mixing Components (d) to (g).

### [Fabrication of Optical Waveguides]

An over-cladding layer was first formed on a surface of a glass substrate with the use of the over-cladding layer formation material by a spin coating method. The over-cladding layer had a thickness of 25 µm and an elasticity modulus of 3 MPa. The elasticity modulus was measured by means of a viscoelasticity measuring apparatus (RSA3 available from TA Instruments Japan Inc.)

Lattice-pattern linear cores and rectangular dummy patterns were simultaneously formed on a surface of the over-cladding layer with the use of the core/dummy pattern formation material by a photolithography method using a single photomask. The cores and the dummy patterns each had a thickness of 50 µm and an elasticity modulus of 2 GPa. A spacing between the dummy patterns and the cores is shown below in Table 1. In the Comparative Example, the dummy patterns were not formed.

Then, an under-cladding layer was formed over an upper surface of the over-cladding layer with the use of the under-cladding layer formation material by a spin coating method to cover the cores and the dummy patterns. The under-cladding layer had a thickness of 25 µm and an elasticity modulus of 3 MPa.

In turn, the over-cladding layer was separated from the glass substrate. Then, the under-cladding layer was bonded to a surface of an aluminum plate with an adhesive agent. In this manner, optical waveguides (see FIG. 1B) were each fabricated on the surface of the aluminum plate with the intervention of the adhesive agent.

### [Evaluation of Optical Waveguides]

Characters were written on ten surface portions of the over-cladding layer with a ballpoint pen (having a tip diameter of 0.5 mm) by applying a load shown below in Table 1 on the surface portions by a tip of the ballpoint pen. As a result, an optical waveguide free from cracking in the over-cladding layer, the cores and the under-cladding layer and ensuring good writing feeling was rated as excellent and marked with "oo" in Table 1, and an optical waveguide free from cracking in the over-cladding layer, the cores and the under-cladding layer, but failing to ensure good writing feeling was rated as acceptable and marked with "o" in Table 1. Further, an optical waveguide suffering from cracking in any of the over-cladding layer, the cores and the under-cladding layer was rated as unacceptable and marked with "x" in Table 1.

**Table 1**

| | Example | | | | Comparative Example |
|---|---|---|---|---|---|
| | 1 | 2 | 3 | 4 | |
| Dummy patterns | Present | | | | Absent |
| Spacing between dummy patterns and cores (µm) | 10 | 150 | 300 | 400 | - |
| Evaluation | | | | | |
| Load: 3 N | ○○ | ○○ | ○○ | ○ | × |
| Load: 5 N | ○○ | ○○ | ○○ | ○ | × |
| Load: 8 N | ○○ | ○○ | ○○ | ○ | × |
| Load: 10 N | ○○ | ○○ | ○○ | ○ | × |

The results shown above in Table 1 indicate that the optical waveguides of Examples 1 to 4 were excellent in cracking resistance to a great pressing force. Particularly, the optical waveguides of Examples 1 to 3 ensured excellent writing feeling. Further, the optical waveguide of the Comparative Example was inferior in cracking resistance. Differences in the results are attributable to the presence or absence of the dummy patterns, and the size of the spacing between the dummy patterns and the cores.

The optical waveguides of Examples 1 to 4 each had a construction as shown in the sectional view of FIG. 1B. Where optical waveguides each having a construction as shown in the sectional view of FIG. 4 were fabricated, evaluation results had substantially the same tendency as in Examples 1 to 4.

In Examples 1 to 4, the top surfaces of the dummy patterns were located at the same height level as the top surfaces of the cores (were flush with the top surfaces of the cores). Even where the height level of the top surfaces of the dummy patterns was different from the height level of the top surfaces of the cores, the resulting optical waveguides were free from the cracking of the cores, but impaired the writing feeling. In Examples 1 to 4, the dummy patterns and the cores had the same thickness. Where the thickness of the dummy patterns was different from the thickness of the cores, the resulting optical waveguides were free from the cracking of the cores, but impaired the writing feeling.

Further, where a rubber layer having a thickness of 20 to 2000 µm and an elasticity modulus of 0.1 M to 1 GPa was provided on a lower surface of the under-cladding layer of each of the optical waveguides, evaluation results had substantially the same tendency as in Examples 1 to 4.

While specific forms of the embodiments of the present invention have been shown in the aforementioned inventive examples, the inventive examples are merely illustrative of the invention but not limitative of the invention. It is contemplated that various modifications apparent to those skilled in the art could be made within the scope of the invention.

The inventive input device is free from the cracking of the optical waveguide thereof, and properly functions for its purpose even if the input device is pressed with a great pressing force when information such as a character is inputted by means of an input element such as a pen.

### REFERENCE SIGNS LIST

- W:: Optical waveguide
- A:: Dummy patterns
- B:: Spacing
- 1:: Under-cladding layer
- 2:: Cores
- 3:: Over-cladding layer

## Claims

1. An input device comprising:
a sheet-form optical waveguide including a plurality of linear cores arranged in a lattice pattern, dummy patterns respectively provided in portions surrounded by the linear cores, and a sheet-form under-cladding layer and a sheet-form over-cladding layer holding the cores and the dummy patterns therebetween;
a light emitting element connected to one-side end faces of the cores of the optical waveguide; and
a light receiving element connected to the other-side end faces of the cores;
wherein light emitted from the light emitting element is transmitted through the cores of the optical waveguide and received by the light receiving element;
wherein a surface region of the over-cladding layer corresponding to the plurality of linear cores arranged in the lattice-pattern is defined as an input region, and a pressed position at which the input region is pressed with an input tip portion of an input element is specified based on light transmission amounts of the cores changed by the pressing;
wherein the dummy patterns and the cores each have an elasticity modulus that is not less than the elasticity moduli of the under-cladding layer and the over-cladding layer, whereby the cores are prevented from being cracked when the input region is pressed with the input tip portion.

2. The input device according to claim 1, wherein spacings between peripheral surfaces of the dummy patterns and opposed side surfaces of the cores are each 10 to 300 µm.

3. The input device according to claim 1 or 2,
wherein the optical waveguide is configured such that the cores and the dummy patterns are embedded in a surface of the under-cladding layer with top surfaces of the cores and dummy patterns being flush with the surface of the under-cladding layer, and
wherein the over-cladding layer covers the surface of the under-cladding layer, the top surfaces of the cores and the top surfaces of the dummy patterns.
